(19) Europäisches Patentamt
European Patent Office
Office européen des brevets

(11) **EP 3 982 106 A1**

(12) **DEMANDE DE BREVET EUROPEEN**

(43) Date de publication:
**13.04.2022 Bulletin 2022/15**

(21) Numéro de dépôt: **21201989.7**

(22) Date de dépôt: **11.10.2021**

(51) Classification Internationale des Brevets (IPC):
**G01N 9/18** *(2006.01)*

(52) Classification Coopérative des Brevets (CPC):
**G01N 9/18; G01N 9/14**

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**
Etats d'extension désignés:
**BA ME**
Etats de validation désignés:
**KH MA MD TN**

(30) Priorité: **12.10.2020 FR 2010390**

(71) Demandeur: **Commissariat à l'énergie atomique
et aux énergies alternatives
75015 Paris (FR)**

(72) Inventeur: **PORTE, Florian
38054 GRENOBLE CEDEX 09 (FR)**

(74) Mandataire: **Brevalex
56, Boulevard de l'Embouchure
B.P. 27519
31075 Toulouse Cedex 2 (FR)**

(54) **DISPOSITIF DE MESURE AUTOMATIQUE DE DENSITÉ D'UN LIQUIDE**

(57) L'invention porte sur un procédé et un dispositif de mesure automatique de densité d'un liquide, comportant :
- un récipient (3) destiné à contenir ledit liquide (9),
- un flotteur (5) destiné à être immergé dans ledit liquide (9) lorsqu'il est contenu dans le récipient (3), et
- un système électronique comportant :
- un premier capteur électromagnétique (151) configuré pour effectuer une mesure de référence relative aux propriétés électriques du liquide (9),

- un deuxième capteur électromagnétique (152) configuré pour effectuer une mesure de volume du liquide déplacé lorsque le flotteur (5) est immergé dans le liquide (9), et
- un circuit électronique (17) couplé audits premier et deuxième capteurs électromagnétiques (151, 152) pour déterminer la densité du liquide sur la base de la mesure des propriétés physiques du liquide et de la mesure du volume du liquide déplacé.

FIG.1

EP 3 982 106 A1

**Description**

**Domaine Technique**

La présente invention concerne le domaine de la mesure de densité d'un liquide associée à au moins une autre mesure.

**Etat de la technique antérieure**

Dans de nombreux domaines industriels, environnementaux, et médicaux on cherche à mesurer la densité d'un liquide. C'est le cas notamment dans les domaines pharmaceutiques, pétrochimiques, électrochimiques, agroalimentaires etc.

A titre d'exemple, on a besoin de mesurer la densité d'un liquide pour contrôler des batteries ou des huiles d'usinage, pour contrôler la qualité des liquides alimentaires (vin, cidre, bière, lait, huiles...), pour analyser des paramètres médicaux (analyse sang, urines...), pour analyser l'eau dans des stations d'épurations, ou pour des analyses océanographiques, la réalisation de médicaments (bioréacteur), etc.

Il existe plusieurs sortes de dispositifs de mesure de densité d'un liquide. Il y a par exemple, des densimètres manuels qui sont couramment répandus dans divers domaines d'activités. Leurs dimensions et leur poids définissent la gamme et la précision de mesure. Toutefois, ils nécessitent des prélèvements et les opérations sont totalement manuelles.

Il existe des densimètres électroniques qui mesurent la fréquence d'oscillation de tubes en forme de U qui varient selon la masse du liquide prélevé. Ces appareils sont chers et sensibles à certaines perturbations (encrassement, bulles). Ils permettent dans certains cas une mesure en ligne « on line » mais pas « in situ ».

Il y a par ailleurs des appareils qui déterminent la densité d'un liquide en mesurant l'indice de réfraction. Toutefois, la mesure peut être perturbée par la présence de gaz (par exemple, $CO_2$) ou l'encrassement du capteur.

On citera encore le document US3921461 décrivant un hydromètre comportant un premier flotteur entièrement immergé dans le liquide et un deuxième flotteur de référence partiellement immergé dans le liquide par lequel les positions verticales relatives des deux flotteurs permettent de déterminer la densité du liquide. Toutefois, la mesure de densité réalisée par ce dispositif peut être affectée par des propriétés physiques du liquide réduisant ainsi la précision de la mesure. En outre, il nécessite deux flotteurs pour réaliser une mesure indirecte de la densité du liquide.

Ainsi, l'objet de la présente invention est de remédier aux inconvénients précités en proposant un dispositif pour mesurer en temps réel la densité d'un liquide de manière précise, directe et automatique tout en permettant de fournir des mesures complémentaires sur les propriétés du liquide.

**Présentation de l'invention**

L'invention a pour objet un dispositif de mesure automatique de densité d'un liquide, comportant :

- un récipient destiné à contenir ledit liquide (dont la densité doit être mesurée),
- un flotteur destiné à être partiellement immergé dans ledit liquide lorsqu'il est contenu dans le récipient, et
- un système électronique comportant :

  - un premier capteur électromagnétique configuré pour effectuer une mesure de référence relative aux propriétés électriques du liquide,(conductivité, permittivité)
  - un deuxième capteur électromagnétique configuré pour effectuer une mesure de volume du liquide déplacé lorsque le flotteur est immergé dans le liquide, et
  - un circuit électronique couplé audits premier et deuxième capteurs électromagnétiques pour déterminer la densité du liquide sur la base de la mesure des propriétés physiques du liquide et de la mesure du volume du liquide déplacé, les propriétés physiques comportant la conductivité et la permittivité du liquide.

La masse du flotteur étant connue, la mesure du volume du liquide déplacé donne une estimation de la densité du liquide et la mesure de référence permet de corriger l'estimation de cette densité générant ainsi de manière automatique une valeur très précise de la densité du liquide.

Avantageusement, chacun des capteurs électromagnétiques comporte un résonateur ayant une fréquence de résonance qui dépend de son environnement, ledit résonateur comprenant une réactance (capacitive ou inductive) active en forme d'électrode(s), dite électrode(s) de réactance associée(s) à un élément de couplage passif correspondant.

Ainsi, chaque capteur permet de renseigner sur la nature et densité du liquide de manière automatique.

Selon un mode particulier de réalisation, les première et deuxième électrodes de réactance sont des électrodes capacitives formées par des premier et deuxième couples d'armatures respectivement.

Avantageusement, le dispositif de mesure comporte en outre des troisième et quatrième capteurs comprenant des troisième et quatrième électrodes de réactance respectivement.

Selon un mode particulier de réalisation, les troisième et quatrième électrodes de réactance sont des électrodes inductives formées par des première et deuxième bobines respectivement.

Avantageusement, le dispositif de mesure comporte au moins une sonde de température.

Selon un premier mode de réalisation, les premier et deuxième capteurs électromagnétiques comportent des première et deuxième électrodes de réactance respectivement, lesdites première et deuxième électrodes de réactance sont disposées sur la surface latérale du récipient. La première électrode de réactance est disposée au niveau du fond du récipient et la deuxième électrode de réactance est disposée au niveau du col du récipient. Le premier capteur électromagnétique est configuré pour effectuer une mesure de référence. Le deuxième capteur électromagnétique est configuré pour effectuer une première mesure de niveau du liquide dans le récipient en absence du flotteur et pour effectuer une deuxième mesure de niveau du liquide dans le récipient lorsque le flotteur est immergé dans le liquide.

Cette instrumentation du récipient est très facile à mettre en œuvre et permet de réaliser des mesures très précises.

Avantageusement, les troisième et quatrième électrodes de réactance sont disposées sur la surface latérale du récipient à des niveaux intermédiaires entre les première et deuxième électrodes de réactance.

Ces troisième et quatrième électrodes de réactance permettent d'augmenter davantage la précision de la mesure de la densité ou des mesures complémentaires.

Avantageusement, le récipient est réalisé dans un matériau isolant comme par exemple un bêcher en verre constitué d'un cylindre vertical gradué, à fond plat et au bord haut.

Selon un deuxième mode de réalisation, ledit système électronique comporte en outre une antenne et une batterie et au moins une partie du système électronique est intégré dans le flotteur.

Avantageusement, le plongeur du flotteur intègre une batterie et le premier capteur électromagnétique, et la tige du flotteur intègre l'antenne et le deuxième capteur électromagnétique.

Avantageusement, le dispositif de mesure comporte un capteur de mouvement configuré pour mesurer le mouvement du flotteur et indirectement celle du liquide.

Avantageusement, le plongeur comporte dans sa partie basse un aimant permettant de mettre en mouvement le flotteur afin d'agiter le liquide.

Avantageusement, selon les besoins de l'application, le dispositif de mesure peut comporter au moins un autre capteur adapté pour mesurer des propriétés chimiques du liquide (par exemple, pH, $O_2$ dissout, $CO_2$ dissout, potentiel Rédox, etc.).

Avantageusement, le dispositif de mesure comporte un module de calibration et de recharge inductive destiné à calibrer le flotteur et à télé-recharger la batterie intégrée dans le flotteur, ledit module de calibration et de recharge inductive pouvant être compris dans un étui de protection du flotteur.

Selon un troisième mode de réalisation, le dispositif de mesure comporte un couvercle destiné à être déposé sur l'ouverture du récipient. Le couvercle comprend une ouverture tubulaire destinée à laisser passer une partie de la tige du flotteur de manière à permettre une télé alimentation. Le deuxième capteur est disposé sur l'ouverture tubulaire et la tige est au moins en partie métallisée.

L'invention vise également un procédé de mesure automatique de densité d'un liquide, comportant les étapes suivantes :

- réaliser une mesure à vide,
- verser ledit liquide dans un récipient,
- utiliser un premier capteur électromagnétique pour effectuer une mesure électromagnétique de référence relative aux propriétés électriques du liquide contenu dans le récipient,
- utiliser un deuxième capteur électromagnétique pour effectuer une première mesure électromagnétique du niveau du liquide dans le récipient,
- introduire un flotteur dans ledit liquide contenu dans le récipient,
- utiliser le deuxième capteur pour effectuer une deuxième mesure électromagnétique du niveau du liquide dans le récipient, et
- utiliser un microprocesseur pour déterminer la densité du liquide en fonction de la mesure des propriétés physiques du liquide et des première et deuxième mesures de niveau, les propriétés physiques comportant la conductivité et la permittivité du liquide.

Selon un mode de réalisation, les premier et deuxième capteurs électromagnétiques sont disposés sur le récipient.

Selon un autre mode de réalisation, les premier et deuxième capteurs électromagnétiques sont intégrés dans le flotteur, le procédé comportant en outre :

- une recharge inductive et une auto calibration du flotteur,
- une mesure de stabilisation du liquide par un capteur de mouvement intégré dans le flotteur, et
- une détermination de la densité du liquide par le microprocesseur après la stabilisation du liquide.

D'autres avantages et caractéristiques de l'invention apparaîtront dans la description détaillée non limitative ci-dessous.

**Brève description des figures**

On décrira à présent, à titre d'exemples non limitatifs, des modes de réalisation de l'invention, en se référant aux dessins annexés, dans lesquels :

[Fig. 1] illustre très schématiquement un dispositif de mesure automatique de densité d'un liquide, selon un mode de réalisation de l'invention ;
[Fig. 2] illustre très schématiquement un dispositif de mesure automatique de densité d'un liquide, selon un premier mode de réalisation préféré de l'invention ;
[Fig. 3] illustre de manière très schématique la disposition d'un capteur électromagnétique sur la surface latérale du récipient, selon le mode de réalisation de la Fig. 2 ;
[Fig. 4] illustre des graphes indiquant la sensibilité des différents capteurs électromagnétiques, selon le premier mode de réalisation de l'invention ;
[Fig. 5] illustre un procédé de mesure automatique de densité d'un liquide en utilisant le dispositif de détection selon le premier mode de réalisation de l'invention ;
[Fig. 6A] et
[Fig. 6B] illustrent très schématiquement un dispositif de mesure automatique de densité d'un liquide, selon un deuxième mode de réalisation préféré de l'invention ; et
[Fig. 7] illustre très schématiquement un dispositif de mesure automatique de densité d'un liquide, selon un troisième mode de réalisation préféré de l'invention.

**Description des modes de réalisation**

Le principe de l'invention est de déterminer de manière automatique la densité d'un liquide à partir des mesures électromagnétiques réalisées directement sur le liquide avec l'intermédiaire d'un flotteur partiellement immergé dans ce liquide.

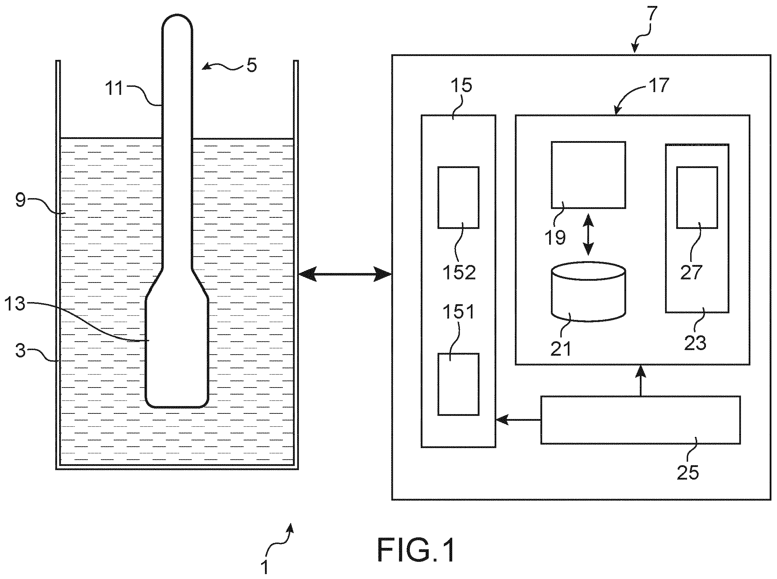

La Fig. 1 illustre très schématiquement un dispositif de mesure automatique de densité d'un liquide, selon un mode de réalisation de l'invention.

Le dispositif de mesure 1 comporte un récipient 3, un flotteur 5 et un système électronique 7.

Le récipient 3 est destiné à contenir le liquide 9 dont la densité doit être mesurée. Il est réalisé dans un matériau isolant comme par exemple en verre. Il présente des caractéristiques en coupe connues et peut par exemple être en forme d'un cylindre vertical gradué, à fond plat et au bord haut de type bêcher. On notera que le récipient peut aussi être formé d'une cuve de culture cellulaire ou de fermentation en verre ou tout autre récipient.

Le flotteur 5 d'une masse prédéterminée selon la gamme de mesure souhaitée est éventuellement muni d'une tige 11 s'étendant vers le haut et d'un plongeur 13 destiné à le faire immerger partiellement et à assurer sa verticalité dans le liquide 9 lorsqu'il est contenu dans le récipient 3.

Le système électronique 7 comporte des capteurs électromagnétiques 15 (au moins deux capteurs 151, 152) ainsi qu'un circuit électronique 17 couplé aux capteurs électromagnétiques 15. Le circuit électronique 17 comporte un microcontrôleur ou microprocesseur 19, une mémoire 21 et une interface d'entrée/sortie 23. En outre le système électronique 7 comporte un module de gestion de l'énergie 25 comprenant une batterie ou autre moyen d'alimentation électrique. Le système électronique 7 peut être situé soit sur le récipient 3, soit à l'intérieur du flotteur 5, soit sur une pièce interemédiaire (par exemple couvercle) selon différents modes de réalisation décrits plus en avant.

Chaque capteur électromagnétique 15 comporte un circuit inductif-capacitif LC établissant un résonateur ayant une fréquence de résonance propre qui dépend de l'environnement du résonateur. La fréquence de résonance varie selon le niveau (i.e. interface liquide/air) du liquide 9 dans le récipient 3 et sa nature. La mesure par un capteur électromagnétique 15 de cette fréquence de résonance renseigne ainsi sur la nature et la configuration de cet environnement.

Un premier capteur électromagnétique 151 est configuré pour effectuer une mesure de référence relative aux propriétés physiques du liquide 9 et plus particulièrement, aux propriétés électriques telles que la conductivité et la permittivité du liquide 9 contenu dans le récipient 3.

Un deuxième capteur électromagnétique 152 est configuré pour effectuer une mesure de volume du liquide déplacé lorsque le flotteur 5 est immergé dans le liquide 9. Etant donné que le flotteur 5 présente une masse constante et connue, le volume du liquide déplacé par ce flotteur 5 est représentatif de la densité du liquide.

Le microprocesseur 19 est configuré pour déterminer la densité du liquide 9 sur la base de la mesure du volume du liquide déplacé réalisée par le deuxième capteur 152 et de la mesure des propriétés électriques du liquide réalisée par le premier capteur 151.

En effet, le microprocesseur estime la valeur de la densité du liquide à partir du volume du liquide déplacé par le flotteur et la masse du flotteur 5. En outre, la mesure des propriétés électriques du liquide 9 réalisée par le premier capteur 151 est une mesure de référence qui permet au microprocesseur 15 de corriger la première estimation et de déterminer la densité du liquide 9 avec une très grande précision.

La densité déterminée par le microprocesseur 19 est avantageusement transmise par une liaison numérique (avec ou sans fils) par l'interface d'entrée/sortie 23 à l'utilisateur pour être affichée sur un écran d'affichage 27. En outre, un historique des différents résultats peut être enregistré dans la mémoire 21.

Avantageusement, selon les besoins de l'application, le dispositif de mesure peut comporter d'autres capteurs adaptés pour mesurer des propriétés chimiques du liquide. A titre d'exemple, le dispositif de mesure peut comporter un capteur de mesure du pH, des capteurs de mesures des gaz ($O_2$, $CO_2$) dissous dans le liquide, un capteur de mesure du potentiel Rédox, etc.

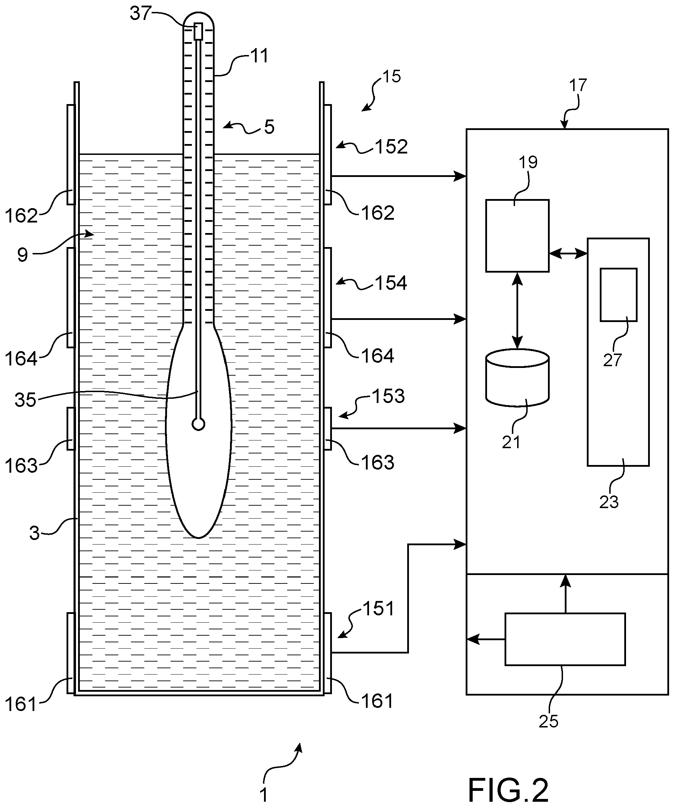

La Fig. 2 illustre très schématiquement un dispositif de mesure automatique de densité d'un liquide, selon un premier mode de réalisation préféré de l'invention.

Le système électronique comprenant tous les éléments (i.e. capteurs électromagnétiques 15, microcontrôleur ou microprocesseur 19, mémoire 21, interface d'entrée/sortie 23, et module de gestion de l'énergie 25) est intégré au récipient 3. En variante, seule une partie du système électronique (comprenant au moins les capteurs électromagnétiques 15) est intégrée au récipient comme illustré sur la Fig. 2.

Ainsi, selon ce premier mode de réalisation, le récipient 3 est instrumenté par la disposition d'au moins deux capteurs électromagnétiques 151, 152 sur sa surface. Chacun des capteurs 15 comporte un résonateur qui comprend une réactance active en forme d'électrode(s), dite électrode(s) de réactance associée à un élément de couplage passif correspondant. L'électrode de réactance peut être de nature capacitive ou inductive. En particulier, si cette électrode est de nature capacitive, alors l'élément de couplage correspondant est de nature inductive et vice versa, formant ainsi un résonateur dont la fréquence de résonance varie selon le niveau et la nature du liquide 9 contenu dans le récipient 3.

Avantageusement, les électrodes de réactance des différents capteurs électromagnétiques 15 sont disposées sur la surface latérale du récipient 3.

Une première électrode 161 de réactance d'un premier capteur 151 est disposée sur la surface latérale et au niveau du fond du récipient 3. Ainsi, cette première électrode 161 de réactance n'est pas affectée par le niveau du liquide 9 dans le récipient 3 et permet par conséquent, au premier capteur 151 d'effectuer une mesure de référence en mesurant les propriétés électriques par exemple, la permittivité et la conductivité du liquide 9.

En outre, une deuxième électrode 162 de réactance d'un deuxième capteur 152 est également disposée sur la surface latérale mais au niveau du col du récipient 3 et plus particulièrement, dans la zone de l'éventuelle interface air-liquide. Le deuxième capteur électromagnétique 152 est configuré pour effectuer une première mesure de niveau du liquide 9 dans le récipient 3 en absence du flotteur 5 (i.e. sans que le flotteur 5 soit immergé dans le liquide 9) et pour effectuer une deuxième mesure de niveau du liquide dans le récipient 3 lorsque le flotteur 5 est immergé dans le liquide 9. Ainsi, le deuxième capteur 152 est adapté pour mesurer essentiellement le niveau du liquide c'est-à-dire, le niveau de l'interface air-liquide. La différence des valeurs entre les première et deuxième mesures réalisées par le deuxième capteur 152 est représentative du déplacement du liquide vers le haut (i.e. la variation du niveau du liquide) dû à l'immersion du flotteur 5.

A titre d'exemple, les première 161 et deuxième 162 électrodes de réactance des premier 151 et deuxième capteurs 152 sont des électrodes capacitives formées par des premier et deuxième couples d'armatures respectivement. Dans ce cas, les éléments de couplage correspondant sont des éléments inductifs (non illustrés).

A titre d'exemple, les troisièmes 163 et quatrième 164 électrodes de réactance des troisièmes 153 et quatrième capteurs 154 sont des électrodes capacitives inter-digitées qui peuvent apporter une information complémentaire sur la nature du liquide à proximité de la paroi. Les éléments de couplage correspondant sont là aussi des éléments inductifs (non illustrés).

Avantageusement, selon un mode de réalisation particulier, les oscilateurs formés par les trois capteurs du bas 151, 153 et 154 dont les électrodes sont disposés pour être totalement immergées sont dimensionnés de manière à avoir des fréquences de résonance différentes. En effet, la permittivité du liquide peut varier selon la fréquence. Ainsi, en dimensionnant les fréquences d'oscillations de ces trois capteurs 151, 153 et 154 pour couvrir une gamme de fréquence suffisament large pour inclure la plage de fréquences du capteur du haut 152 (partiellement immergé), il est possible de corriger la valeur de densité avec la valeur de permittivité correspondant à la fréquence du capteur 152. Cette valeur de permitivité peut alors etre calculée par interpolation à partir des mesures des trois capteurs du bas 151, 153 et 154.

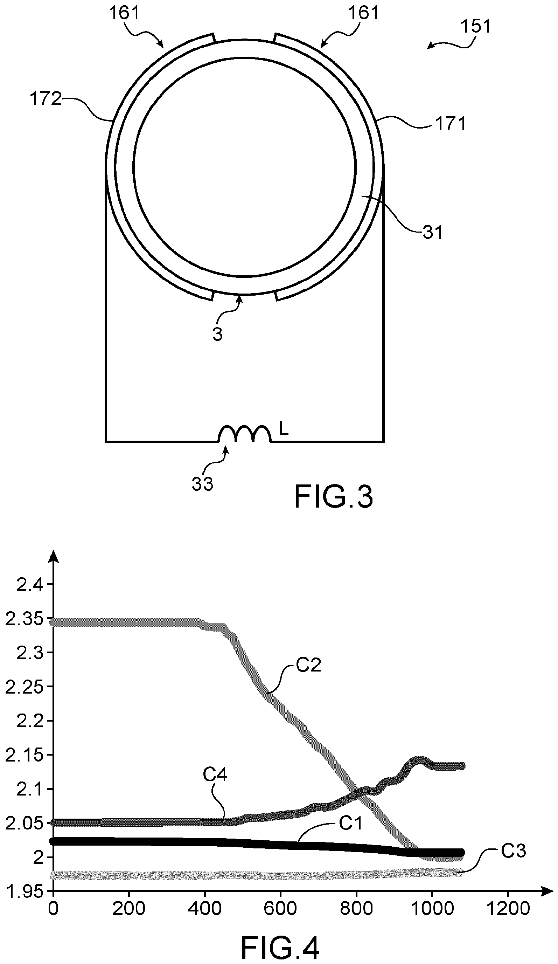

La Fig. 3 illustre de manière très schématique la disposition d'un capteur électromagnétique capacitif sur la surface latérale du récipient, selon le mode de réalisation de la Fig. 2.

A titre d'exemple, on considère le premier capteur électromagnétique 151. L'électrode 161 de réactance du capteur 151 comporte deux armatures 171 et 172 conductrices disposées l'une en face de l'autre sur la surface externe du récipient 3 en épousant la forme cylindrique de cette surface. Ainsi, un condensateur de forme tubulaire est formé par les deux armatures 171, 172 séparées entre elles par un diélectrique constitué par les parois 31 isolants du récipient 3 ainsi que par la nature du fluide dans le récipient 3 aux niveaux des armatures 171, 172. On notera qu'en variante, les armatures 171 et 172 conductrices du capteur peuvent etre interdigitées.

Etant donné que la géométrie du condensateur est invariante, sa capacité C dépend essentiellement de la nature du diélectrique et plus particulièrement de la nature et composition du fluide contenu dans le récipient 3 entre les armatures 171, 172.

En outre, les armatures 171, 172 du condensateur de capacité C sont connectées à une inductance pouvant être une bobine 33 d'inductance L prédéterminée, formant ainsi un circuit de résonance dont la fréquence dépend de la capacité C qui peut être variable et de l'inductance L qui est constante. Le capteur électromagnétique 151 mesure la fréquence de résonance permettant ainsi au microprocesseur 19 de déduire la valeur de la capacité C et par conséquent, la permittivité du fluide dans le cas où le fluide contenu dans le récipient 3 remplit l'espace entre les armatures 171, 172.

Ainsi, pour le deuxième capteur électromagnétique 152 dont les armatures sont disposées (lorsqu'un liquide est contenu dans le récipient 3) au niveau de l'interface air-liquide, la variation des fréquences de résonance entre la première mesure et la deuxième mesure est indicative de la variation de la permittivité de l'isolant entre les armatures à cause du déplacement de l'interface air-liquide. On notera que la permittivité relative d'un liquide par rapport à l'air est assez significative. Par exemple, la permittivité relative de l'eau par rapport à l'air est de l'ordre de 80. Ainsi, la proportion du liquide 9 dans l'isolant entre les armatures affecte sensiblement la capacité du condensateur. En particulier, l'introduction du flotteur 5 dans le liquide 9 fait augmenter le niveau du liquide qui par conséquent, fait augmenter la capacité générant une baisse de la fréquence de résonance.

En revanche, pour le premier capteur électromagnétique 151 disposé au niveau du fond du récipient 3, lorsqu'un liquide 9 est contenu dans le récipient 3, il n'y a pas d'interface air-liquide au niveau des armatures et par conséquent, la fréquence de résonance mesurée est indicative uniquement de la nature et en particulier, de la permittivité du liquide 9.

En connaissant la masse du flotteur 5, le microprocesseur 19 peut alors estimer la valeur de la densité du liquide 9 à partir de la variation de niveau du liquide qui est proportionnelle au volume du liquide déplacé par le flotteur 5. En outre, la mesure des propriétés électriques du liquide 9 réalisée par le premier capteur 151 est une mesure de référence qui permet au microprocesseur 19 de corriger la première estimation et de déterminer la densité du liquide 9 avec une plus grande précision.

Avantageusement, le récipient 3 comporte d'autres capteurs électromagnétiques. Par exemple, il comporte des troisième 153 et quatrième 154 capteurs électromagnétiques comprenant des troisième 163 et quatrième 164 électrodes de réactance respectivement, disposées sur la surface latérale du récipient 3 à des niveaux intermédiaires et selon différentes hauteurs, entre les première 161 et deuxième 162 électrodes de réactance.

A titre d'exemple, les troisième 163 et quatrième 164 électrodes de réactance sont des électrodes inductives formées par des première et deuxième bobines respectivement. Ces électrodes intermédiaires de réactance vont également être influencées par la position du flotteur 5 permettant d'augmenter davantage la précision de la mesure de densité du liquide 9.

Selon un autre exemple, dans le cas où la permittivité du liquide dépend de la fréquence, les troisième 163 et quatrième 164 capteurs peuvent servir de références en complément du deuxième capteur 162 de manière à estimer l'évolution de la permittivité du liquide. Cette estimation peut être réalisée sur une gamme de fréquence correspondant à la plage de fonctionnement du premier capteur 161 (par exemple, par spectroscopie d'impédance sur trois points). Les fréquences de ces capteurs peuvent être ajustées en variant la taille des électrodes et la valeur de l'inductance associée.

On notera qu'on peut ajuster la sensibilité des capteurs selon les besoins de l'application souhaitée. Plus particulièrement, le choix de la partie sensible (inductive ou capacitive), la géométrie des armatures capacitives (cylindriques, inter digitées, etc.) et des bobines (cylindriques, planes, etc.) permettent d'ajuster la sensibilité de chaque capteur à la valeur du paramètre que l'on souhaite mesurer. Par exemple si on souhaite augmenter la sensibilité de la mesure à proximité de la paroi, un capteur capacitif avec une électrode constituée par deux armatures inter-digitées pourra être privilégié. De cette façon la mesure de niveau pourra être plus ou moins sensible à la valeur du ménisque.

L'exemple décrit ci-dessous a été réalisé avec quatre capteurs électromagnétiques 151-154 dont les parties sensibles sont formées soit par des couples d'armatures 161, 162 ou soit par des bobines 163, 164.

Chaque capteur est sensible à la fois aux propriétés électriques et au niveau de liquide avant et après ajout du densimètre. La position et la géométrie de chaque partie sensible sont avantageusement déterminées en fonction de la gamme de mesure recherchée.

Dans le cas où les variations des paramètres d'influences sont suffisamment réduites, les relations entre les fréquences mesurées et chaque paramètre peuvent être considérés comme linéaires. Dans ce cas, un algorithme utilisant l'inversion de matrices peut alors fournir des indicateurs sur le volume, la permittivité, la conductivité en plus de la valeur de densité à partir de la résolution d'un système de quatre équations à quatre inconnues décrit dans un exemple plus en avant.

Pour des gammes plus étendues, un algorithme combinant inversion de matrices et interpolations polynomiales peut être établi avec plus de points de calibration par exemple, en faisant varier la position du flotteur 5 de façon contrôlée avec un banc spécifique.

La Fig. 4 illustre des graphes indiquant la sensibilité des différents capteurs électromagnétiques.

En particulier, ces mesures correspondent à un mode de réalisation où les capteurs 151 et 152 sont capacitifs et les capteurs 153 et 154 sont inductifs.

L'ordonné représente la fréquence en MHz et l'abscisse représente le nombre d'acquisition à un rythme de 50Hz. Selon cet exemple, on fait varier les fréquences des capteurs électromagnétiques 151-154 en ajoutant manuellement de l'eau salée dans le récipient 3 en présence du flotteur 5.

On observe dans les graphes que les sensibilités sont très différentes selon la configuration des capteurs électromagnétiques 151-154.

La courbe C1 montre que le capteur capacitif 151 placé en bas est essentiellement sensible aux variations de conductivité et de permittivité. En effet, la courbe C1 indique une faible diminution de la fréquence relative au capteur capacitif 151 liée à l'augmentation de la conductivité.

La courbe C2 montre que le capteur capacitif à armature inter-digitées 152 placé au niveau de l'interface air-liquide est très sensible au niveau du liquide et dans une moindre mesure à la conductivité et à la permittivité. La forte diminution de la fréquence relative au capteur capacitif 152 est liée principalement à l'augmentation du niveau du liquide et dans une moindre mesure à une augmentation de la conductivité.

Les courbes C3 et C4 montrent que les capteurs inductifs 153, 154 placés au centre sont sensibles aux propriétés électriques et aussi (courbe C4) à la position du flotteur 5. L'augmentation de la fréquence relative au capteur inductif 153 est liée à l'augmentation de la conductivité et dans une moindre mesure au niveau du flotteur. En outre, la forte augmentation de la fréquence relative au capteur inductif 154 est principalement liée au niveau du flotteur et dans une moindre mesure à l'augmentation de la conductivité.

Ainsi, en connaissant chacune des sensibilités, par exemple en utilisant un liquide aux propriétés connues, le problème revient alors à résoudre quatre équations avec quatre inconnues.

Avantageusement, le dispositif de mesure 1 comporte en outre une sonde de température 35 permettant de mesurer la température du liquide 9 pour apporter un facteur correctif. La sonde de température 35 peut être intégrée au flotteur 5 et relié à un tag RFID 37. La mesure de température apporte un paramètre supplémentaire et un facteur de correction permettant au microprocesseur 19 d'améliorer encore davantage la précision de la densité du liquide 9 en fonction de la température.

Pour donner un ordre de grandeur des précisions atteignables, ce procédé est réalisé en faisant varier la position du flotteur et par conséquent le niveau de remplissage du récipient à l'aide par exemple d'une vis micrométrique. On observe que la mesure est sensible à de très faibles variations de niveau de l'ordre de 1/10 de mm.

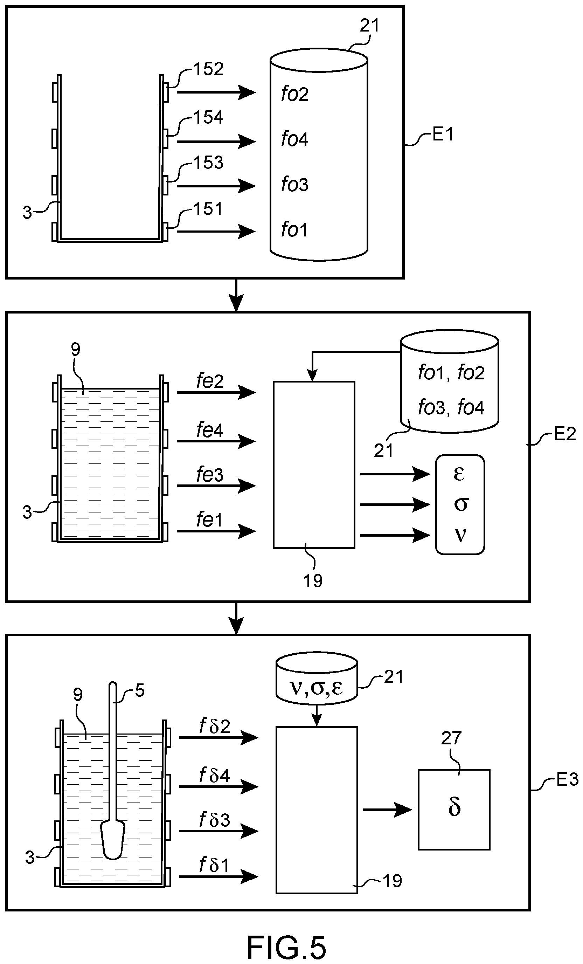

La Fig. 5 illustre un procédé de mesure automatique de densité d'un liquide en utilisant le dispositif de détection selon le premier mode de réalisation de l'invention.

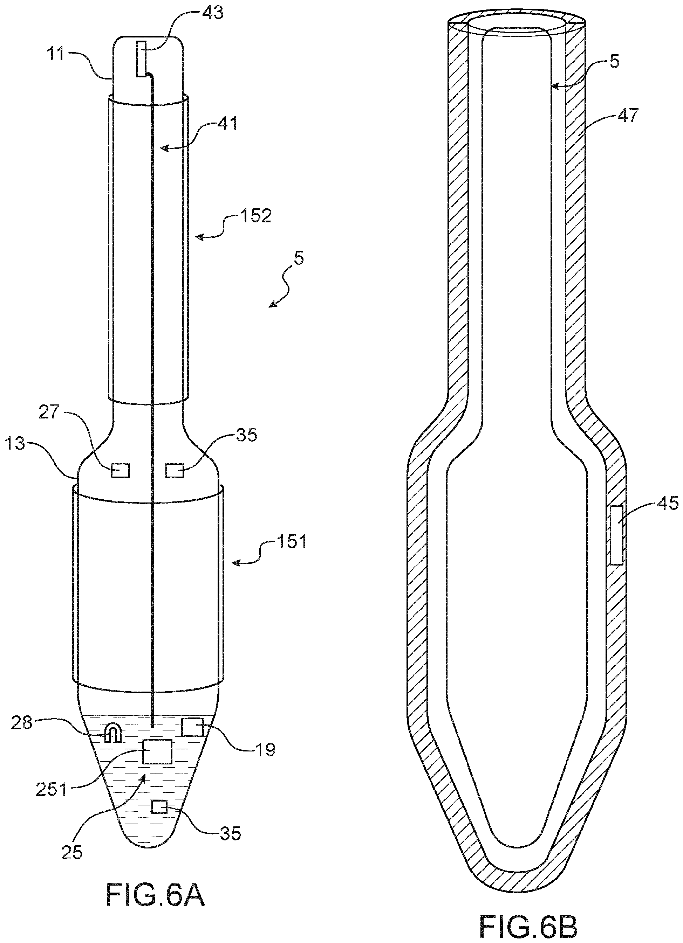

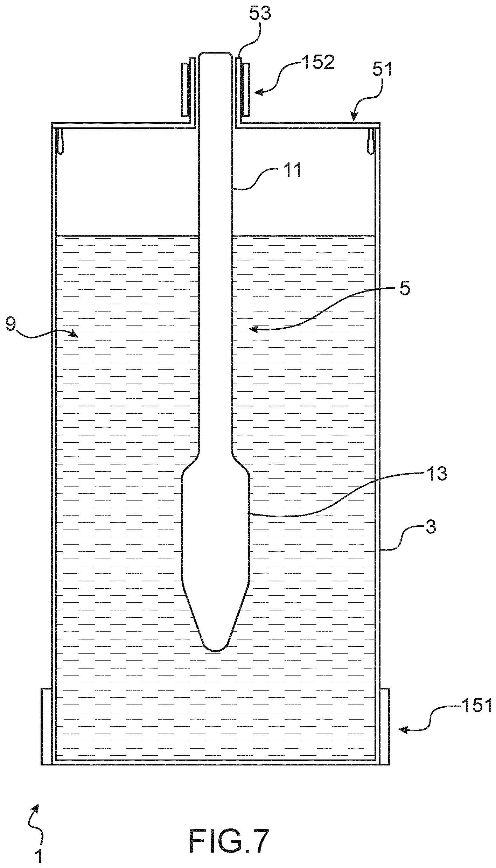

A l'étape E1, on réalise une mesure à vide, c'est-à-dire, on mesure les fréquences de résonance lorsque le récipient est vide dans les cas des premier (Fig. 2) et troisième (voir Fig. 7) modes de réalisation ou lorsque le densimètre instrumenté est placé dans son étuis dans le cas du deuxième mode de réalisation (Fig. 6).

Soit fo1 et fo2 les fréquences de résonance mesurées par les capteurs électromagnétiques 151 et 152, fo3 et fo4 les fréquences de résonance des capteurs 153 et 154. Ces valeurs fo1, fo2, fo3, fo4 sont mémorisées dans la mémoire 21.

A l'étape E2, le liquide 9 est versé dans le récipient 3 de façon à ce que le capteur 152 soit partiellement immergé et que les capteurs 151, 153 et 154 le soient totalement.

Les fréquences fe1, fe2, fe3 et fe4 mesurées par les capteurs 151-154 vont permettre au microprocesseur 19 de calculer la permittivité $\varepsilon$, la conductivité $\sigma$ du liquide et le volume V en résolvant un système de quatre équations à trois inconnues :

[Math. 1]

$$\begin{bmatrix} f_{e1} \\ f_{e2} \\ f_{e3} \\ f_{e4} \end{bmatrix} = Se * \begin{bmatrix} V \\ \varepsilon \\ \sigma \end{bmatrix} + \begin{bmatrix} f_{o1} \\ f_{o2} \\ f_{o3} \\ f_{o4} \end{bmatrix}$$

où Se est une matrice de calibration dont les coefficients sont prédéterminés lors d'une phase préalable de calibration. A titre d'exemple, ces coefficients de la matrice Se sont déterminés en utilisant plusieurs mélanges de liquides aux propriétés électriques connues correspondant à la gamme de mesure souhaitée. En variante, on utilise plusieurs volumes de liquide correspondant à la gamme de sensibilité du capteur électromagnétique 152.

Les valeurs de permittivité $\varepsilon$, de conductivité $\sigma$ et du volume V du liquide calculées par le microprocesseur 19 sont mémorisées dans la mémoire 21.

On notera que l'étape E2 est valable uniquement dans le cas des premier (Fig. 2) et troisième (Fig. 7) modes de réalisations (i.e. récipient ou couvercle instrumenté). Dans le cas du deuxième mode de réalisation (Fig. 6) relatif à un densimètre instrumenté, cette étape est avantageusement omise car il n'est pas nécessaire de connaître le niveau de remplissage du récipient.

A l'étape E3, on plonge le flotteur 5 dans le liquide 9 contenu dans le récipient 3. Les valeurs des fréquences f$\delta$1, f$\delta$2, f$\delta$3 et f$\delta$4 mesurées par les capteurs 151-154 vont varier en fonction de la position du flotteur 5 et par conséquent, de la densité $\delta$ du liquide 9.

Alors, on obtient un système de quatre équations à quatre paramètres :

[Math. 2]

$$\begin{bmatrix} f_{\delta 1} \\ f_{\delta 2} \\ f_{\delta 3} \\ f_{\delta 4} \end{bmatrix} = S\delta * \begin{bmatrix} V \\ \delta \\ \varepsilon \\ \sigma \end{bmatrix} + \begin{bmatrix} f_{e1} \\ f_{e2} \\ f_{e3} \\ f_{e4} \end{bmatrix}$$

où S$\delta$ est une matrice de calibration dont les coefficients sont prédéterminés lors d'une phase préalable de calibration en utilisant un liquide de densité connue.

Avantageusement, toutes les mesures sont réalisées à une température proche de celle de la calibration. On peut par exemple utiliser un système de régulation de température pour maintenir le liquide 9 à une température constante.

En variante, la calibration peut être réalisée pour plusieurs températures représentatives de la gamme de fonctionnement formant ainsi une matrice de calibration S$\delta$ en fonction de la température T. Ainsi, le microprocesseur 19 utilise la matrice de calibration S$\delta$ adaptée à la température T mesurée par la sonde de température 35 intégrée dans le flotteur 5.

Le microprocesseur 19 utilise les valeurs de permittivité $\varepsilon$, de conductivité $\sigma$ et du volume V calculées et mémorisées dans l'étape précédente comme données d'entrée pour calculer la densité $\delta$ du liquide 9. On obtient alors quatre équations pour une inconnue $\delta$ ce qui permettra d'améliorer ou de vérifier la précision de la densité $\delta$.

La densité $\delta$ du liquide 9 déterminée par le microprocesseur 19 ainsi qu'éventuellement, d'autres données (par exemple, la température T, la permittivité $\varepsilon$, la conductivité $\sigma$ et le volume déplacé du liquide 9) sont affichés sur l'écran d'affichage 27.

En outre, le dispositif de mesure 1 peut comporter des capteurs totalement immergés à différentes profondeurs, configurés pour mesurer un gradient de concentration du liquide.

Les Figs. 6A et 6B illustrent très schématiquement un dispositif de mesure automatique de densité d'un liquide, selon un deuxième mode de réalisation préféré de l'invention.

Selon ce deuxième mode de réalisation, au moins une partie du système électronique est intégré dans le flotteur 5 de sorte que le flotteur ainsi instrumenté devient à lui seul un densimètre automatique.

A titre d'exemple, l'instrumentation du flotteur 5 est réalisée par l'intégration d'au moins deux capteurs électromagnétiques 151, 152 ainsi que par une carte électronique. Cette dernière peut comporter un microcontrôleur ou microprocesseur 19, une ou plusieurs sondes de température 35, un module de gestion de l'énergie 25, un capteur de mouvement 27 et un module de communication sans fils 41. Avantageusement, les éléments sensibles sont placés sur les parois internes du flotteur 5 instrumenté. Le flotteur 5 peut éventuellement être équipé d'un aimant 28 remplissant la fonction d'agitateur. Plus particulièrement, l'aimant 28 est compris dans la partie basse du plongeur 13 permettant de mettre en mouvement le flotteur afin d'agiter le liquide. Avantageusement, l'aimant est un aimant permanent permettant d'agir sur la position du flotteur 5 par une action extérieure.

Plus particulièrement, le premier capteur électromagnétique 151 est intégré dans le plongeur 13 de sorte que lorsque le flotteur 5 est introduit dans le liquide 9, l'électrode active du premier capteur électromagnétique 151 se trouve dans la partie totalement immergée.

Le deuxième capteur électromagnétique 152 est intégré dans la tige 11 du flotteur 5. En particulier, l'électrode active du deuxième capteur 152 est disposée sur toute la longueur de la tige 11. Ainsi, lorsque le flotteur 5 est introduit dans le liquide 9, l'électrode active comporte toujours une partie partiellement immergée dans le liquide. Ainsi, le deuxième capteur 152 mesure le niveau d'immersion de la tige 11 et donc du volume du liquide déplacé indicatif de la densité du liquide.

De la même manière que pour l'instrumentation du récipient 3 (Fig. 2), le premier capteur électromagnétique 151 placé dans la partie totalement immergée permettrait de mesurer les propriétés électriques, tandis que le deuxième capteur électromagnétique 152 placé dans la portion partiellement immergée du flotteur 5 fournirait une indication du niveau de flottaison et donc de la densité du liquide.

Eventuellement, le plongeur 13 peut également intégrer au moins une partie des troisième et quatrième capteurs électromagnétique (non illustrés) disposés entre les premier et deuxième capteurs 151, 152.

En outre, la ou les sondes de température 35 intégrée(s) dans le flotteur 5 est(sont) avantageusement déportée(s) en haut et en bas de la partie large du flotteur 5 pour mesurer un éventuel gradient de température.

Par ailleurs, le capteur de mouvement 27 est par exemple, un accéléromètre qui peut être intégré dans la partie immergée du flotteur. Ce capteur de mouvement 27 est configuré pour mesurer le mouvement du flotteur et indirectement celle du liquide et pour fournir cette information indirecte sur les mouvements du liquide au microprocesseur. En effet, le liquide peut être soumis à une agitation contrôlée par exemple, par l'aimant 28 agitateur. Le microprocesseur récupère les mesures fournies par l'accéléromètre pour calculer la viscosité du liquide. En outre, le capteur de mouvement 27 permet de valider la mesure après une phase de stabilisation du liquide.

Avantageusement, plusieurs capteurs peuvent également être intégrés à différents niveaux du flotteur pour mesurer un gradient de concentration du liquide.

Par ailleurs, le module de gestion de l'énergie 25 comporte une batterie 26 ou un autre moyen d'alimentation avantageusement intégré dans le plongeur 13 du flotteur 5. Selon l'usage, l'autonomie nécessaire pour la durée minimale d'une acquisition permettra de dimensionner le moyen d'alimentation. Dans le cas où l'alimentation électrique est une batterie 251, cette dernière est disposée de préférence en partie basse pour servir de lest. En contraste, une télé alimentation serait située de préférence dans la partie non immergée par exemple pour transmettre l'énergie par l'intermédiaire d'un couvercle ou étui.

Le module de communication sans fils 41 comporte une antenne 43 intégrée dans la tige 11 du flotteur 5 et connectée aux différents capteurs 151, 152 par l'intermédiaire du microcontrôleur 19. L'antenne 43 est configurée pour transmettre selon un système de communication sans fils (par exemple : NFC, RFID, Blue tough, Wifi...) à basse énergie, les données relatives aux mesures réalisées par les capteurs à un appareil de communication sans fils (par exemple, un ordinateur, un smartphone ou autre) comprenant un microprocesseur, une mémoire et une interface d'entrée/sortie.

On notera que selon la nature du récipient et du liquide, le dispositif de mesure 1 peut être télé-alimenté de manière continue.

La Fig. 6B montre que le dispositif de mesure 1 comporte un module 45 de calibration et de recharge inductive destiné à calibrer le flotteur 5 et à télé-recharger la batterie intégrée dans le flotteur. Ce module 45 de calibration et de recharge peut être avantageusement compris dans un étui 47 de protection du flotteur 5.

Le procédé de mesure automatique de densité d'un liquide en utilisant le dispositif de détection selon le deuxième mode de réalisation est similaire à celui décrit en référence à la Fig. 5 sauf qu'ici l'étape E2 n'est pas applicable.

Dans ce cas l'ensemble des mesures et au moins une partie des calculs sont embarqués dans le flotteur.

En particulier, après une recharge inductive et une auto calibration au moyen par exemple de l'étui 47, le flotteur 5 est introduit dans un récipient 3 dans lequel le liquide d'intérêt a déjà été versé.

L'introduction du flotteur peut perturber le liquide dont le niveau d'agitation est mesuré par le capteur de mouvement 27. Après la stabilisation du liquide (indiquée par exemple, par des valeurs constantes du capteur de mouvement 27), le microprocesseur 19 utilise la mesure des propriétés électriques du liquide réalisée par le premier capteur 151 ainsi que la mesure du niveau de flottaison réalisée par le deuxième capteur 152 pour déterminer la densité du liquide.

La Fig. 7 illustre très schématiquement un dispositif de mesure automatique de densité d'un liquide, selon un troisième mode de réalisation préféré de l'invention.

Selon ce troisième mode de réalisation, le dispositif de mesure automatique comporte un couvercle 51 instrumenté par au moins une partie du système électronique. Le couvercle 51 instrumenté est destiné à être déposé sur l'ouverture du récipient 3. En outre, il comprend une ouverture tubulaire 53 destinée à laisser passer une partie de la tige 11 du flotteur 5, de manière à permettre une télé alimentation.

Selon ce mode de réalisation, le deuxième capteur électromagnétique 152 est disposé sur l'ouverture tubulaire 53 et la tige 11 du flotteur 5 est au moins en partie métallisée. Par ailleurs, le premier capteur électromagnétique 151 peut être disposé sur la surface latérale et au niveau du fond du récipient 3 comme dans le premier mode de réalisation. En variante, le premier capteur électromagnétique 151 peut être intégré dans le flotteur comme dans le deuxième mode de réalisation.

Dans ce mode de réalisation une télé alimentation peut être envisagée entre l'ouverture tubulaire 53 et la tige 11.

Bien entendu, diverses modifications peuvent être apportées par l'homme du métier à l'invention qui vient d'être décrite, uniquement à titre d'exemples non limitatifs.

**Revendications**

1. Dispositif de mesure automatique de densité d'un liquide, **caractérisé en ce qu'**il comporte :

   - un récipient (3) destiné à contenir ledit liquide (9),
   - un flotteur (5) destiné à être partiellement immergé dans ledit liquide (9) lorsqu'il est contenu dans le récipient (3), et
   - un système électronique comportant :

      - un premier capteur électromagnétique (151) configuré pour effectuer une mesure de référence relative aux propriétés physiques du liquide (9),
      - un deuxième capteur électromagnétique (152) configuré pour effectuer une mesure de volume du liquide déplacé lorsque le flotteur (5) est immergé dans le liquide (9), et
      - un circuit électronique (17) couplé audits premier et deuxième capteurs électromagnétiques (151, 152) pour déterminer la densité du liquide sur la base de la mesure des propriétés physiques du liquide et de la mesure du volume du liquide déplacé, les propriétés physiques comportant la conductivité et la permittivité du liquide.

2. Dispositif selon la revendication 1, **caractérisé en ce que** chacun des capteurs électromagnétiques (151, 152) comporte un résonateur ayant une fréquence de résonance qui dépend de son environnement, ledit résonateur comprenant une réactance active en forme d'électrode(s), dite électrode(s) de réactance associée à un élément de couplage passif correspondant.

3. Dispositif selon la revendication 2, **caractérisé en ce que** les première et deuxième électrodes de réactance sont des électrodes capacitives formées par des armatures.

4. Dispositif selon l'une quelconque des revendications précédentes, **caractérisé en ce qu'**il comporte en outre des troisième et quatrième capteurs électromagnétiques (153, 154) comprenant des troisième et quatrième électrodes de réactance respectivement.

5. Dispositif selon la revendication 4, **caractérisé en ce que** les troisième et quatrième électrodes de réactance sont des électrodes inductives formées par des première et deuxième bobines respectivement.

6. Dispositif selon l'une quelconque des revendications précédentes, **caractérisé en ce qu'**il comporte au moins une sonde de température (35).

7. Dispositif selon l'une quelconque des revendications 2 à 6, **caractérisé en ce que** les premier et deuxième capteurs électromagnétiques (151, 152) comportent des première et deuxième électrodes de réactance, lesdites première et deuxième électrodes de réactance sont disposées sur la surface latérale du récipient (3), la première électrode de réactance étant disposée au niveau du fond du récipient et la deuxième électrode de réactance étant disposée au niveau du col du récipient, le premier capteur électromagnétique (151) étant configuré pour effectuer une mesure de référence, et le deuxième capteur électromagnétique (152) étant configuré pour effectuer une première mesure de niveau du liquide dans le récipient (3) en absence du flotteur (5) et pour effectuer une deuxième mesure de niveau du liquide dans le récipient (3) lorsque le flotteur (5) est immergé dans le liquide (9).

8. Dispositif selon la revendication 4 ou 5, **caractérisé en ce que** les troisième et quatrième électrodes de réactance sont disposées sur la surface latérale du récipient (3) à des niveaux intermédiaires entre les première et deuxième électrodes de réactance.

9. Dispositif selon l'une quelconque des revendications 1 à 6, **caractérisé en ce que** ledit système électronique (7) comporte en outre une antenne (43) et une batterie (26) et **en ce qu'**au moins une partie du système électronique est intégré dans le flotteur (5).

10. Dispositif selon la revendication 9, **caractérisé en ce que** le plongeur du flotteur intègre une batterie et le premier capteur électromagnétique, et **en ce que** la tige du flotteur intègre l'antenne et le deuxième capteur électromagnétique.

11. Dispositif selon la revendication 9 ou 10, **caractérisé en ce qu'**il comporte un capteur de mouvement (27) configuré pour mesurer le mouvement du liquide.

**12.** Dispositif selon l'une quelconque des revendications 9 à 11, **caractérisé en ce qu'**il comporte un module (45) de calibration et de recharge inductive destiné à calibrer le flotteur (5) et à télé-recharger la batterie intégrée dans le flotteur, ledit module (45) de calibration et de recharge inductive étant compris dans un étui (47) de protection du flotteur (5).

**13.** Dispositif selon l'une quelconque des revendications 1 à 6, **caractérisé en ce qu'**il comporte un couvercle (51) destiné à être déposé sur l'ouverture du récipient (3), ledit couvercle comprenant une ouverture tubulaire (53) destinée à laisser passer une partie de la tige (11) du flotteur (5), le deuxième capteur électromagnétique (152) étant disposé sur l'ouverture tubulaire et la tige (11) du flotteur (5) étant au moins en partie métallisée.

**14.** Procédé de mesure automatique de densité d'un liquide, **caractérisé en ce qu'**il comporte les étapes suivantes :

- verser ledit liquide (9) dans un récipient (3),
- utiliser un premier capteur électromagnétique (151) pour effectuer une mesure électromagnétique de référence relative aux propriétés électriques du liquide contenu dans le récipient (3),
- utiliser un deuxième capteur électromagnétique (152) pour effectuer une première mesure électromagnétique du niveau du liquide dans le récipient,
- introduire un flotteur (5) dans ledit liquide contenu dans le récipient de manière à être partiellement immergé dans ledit liquide (9),
- utiliser le deuxième capteur électromagnétique (152) pour effectuer une deuxième mesure électromagnétique du niveau du liquide dans le récipient, et
- utiliser un microprocesseur (19) pour déterminer la densité du liquide en fonction de la mesure des propriétés physiques du liquide et des première et deuxième mesures de niveau, les propriétés physiques comportant la conductivité et la permittivité du liquide.

**15.** Procédé selon la revendication 14, **caractérisé en ce que** les premier et deuxième capteurs électromagnétiques (151, 152) sont disposés sur le récipient.

**16.** Procédé selon la revendication 14, **caractérisé en ce que** les premier et deuxième capteurs électromagnétiques (151, 152) sont intégrés dans le flotteur (5) et **en ce que** le procédé comporte en outre :

- une recharge inductive et une auto calibration du flotteur (5),
- une mesure de stabilisation du liquide par un capteur de mouvement (27) intégré dans le flotteur (5), et
- une détermination de la densité du liquide par le microprocesseur après la stabilisation du liquide.

FIG.1

EP 3 982 106 A1

FIG.2

FIG.3

FIG.4

FIG.5

FIG.6A

FIG.6B

FIG.7

Europäisches
Patentamt

European
Patent Office

Office européen
des brevets

# RAPPORT DE RECHERCHE EUROPEENNE

Numéro de la demande

EP 21 20 1989

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 5 900 547 A (BARTKIEWICZ LUKE [US]) 4 mai 1999 (1999-05-04) | 1-3,6,14 | INV. G01N9/18 |
| Y | * figure 2 * * colonne 4, ligne 53 – colonne 5, ligne 36 * ----- | 4,5, 7-13,15, 16 | |
| Y | US 2009/277264 A1 (FORKOSH DAN [IL]) 12 novembre 2009 (2009-11-12) | 4,5,8 | |
| A | * figure 1 * * alinéa [0019] – alinéa [0026] * * alinéa [0031] * ----- | 9-12,16 | |
| Y | GB 2 013 900 A (SIEMENS AG) 15 août 1979 (1979-08-15) | 7,15 | |
| A | * figure 1 * * page 1, ligne 7 – ligne 27 * * page 2, ligne 69 – ligne 89 * ----- | 4,5,8 | |
| Y | CN 105 675 437 A (UNIV CHANGSHA) 15 juin 2016 (2016-06-15) | 13 | |
| A | * figure 1 * ----- | 9-12,16 | DOMAINES TECHNIQUES RECHERCHES (IPC) |
| Y | US 2020/072720 A1 (OLK PHILLIP SEBASTIAN [NO]) 5 mars 2020 (2020-03-05) * alinéa [0024] * * alinéa [0028] – alinéa [0033] * ----- | 9-12,16 | G01N |

Le présent rapport a été établi pour toutes les revendications

| Lieu de la recherche | Date d'achèvement de la recherche | Examinateur |
|---|---|---|
| La Haye | 7 février 2022 | Schrauwen, Annelore |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
...............................................................................
& : membre de la même famille, document correspondant

EPO FORM 1503 03.82 (P04C02)

## ANNEXE AU RAPPORT DE RECHERCHE EUROPEENNE
## RELATIF A LA DEMANDE DE BREVET EUROPEEN NO.

EP 21 20 1989

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

07-02-2022

| Document brevet cité au rapport de recherche | | | Date de publication | Membre(s) de la famille de brevet(s) | | | Date de publication |
|---|---|---|---|---|---|---|---|
| US | 5900547 | A | 04-05-1999 | AUCUN | | | |
| US | 2009277264 | A1 | 12-11-2009 | CN | 101506627 | A | 12-08-2009 |
| | | | | EP | 2064529 | A2 | 03-06-2009 |
| | | | | HK | 1133695 | A1 | 01-04-2010 |
| | | | | TW | 200815737 | A | 01-04-2008 |
| | | | | US | 2009277264 | A1 | 12-11-2009 |
| | | | | WO | 2008023282 | A2 | 28-02-2008 |
| GB | 2013900 | A | 15-08-1979 | DE | 2803912 | A1 | 18-10-1979 |
| | | | | FR | 2415800 | A1 | 24-08-1979 |
| | | | | GB | 2013900 | A | 15-08-1979 |
| | | | | JP | S54111375 | A | 31-08-1979 |
| CN | 105675437 | A | 15-06-2016 | AUCUN | | | |
| US | 2020072720 | A1 | 05-03-2020 | CN | 112639416 | A | 09-04-2021 |
| | | | | DE | 112019004428 | T5 | 02-06-2021 |
| | | | | US | 2020072720 | A1 | 05-03-2020 |
| | | | | WO | 2020050960 | A1 | 12-03-2020 |

EPO FORM P0460

Pour tout renseignement concernant cette annexe : voir Journal Officiel de l'Office européen des brevets, No.12/82

## EP 3 982 106 A1

### RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 3921461 A